# EUROPEAN PATENT SPECIFICATION

(11) **EP 0 813 352 B1**
(45) Date of publication and mention of the grant of the patent: **18.08.2004**
(21) Application number: 97303729.4
(22) Date of filing: 02.06.1997
(51) Int. Cl.: H05B 6/80, H05B 6/64, A47J 43/18

(54) **Food support**
Gargutträger
Support d'alimentation

(30) Priority: 12.06.1996 KR 9615590; 12.08.1996 KR 9633441; 12.08.1996 KR 9633442; 08.04.1997 KR 9712894
(43) Date of publication of application: 17.12.1997
(73) Proprietor: Samsung Electronics Co., Ltd., Suwon City, Kyungki-do (KR)
(72) Inventor: Kim, Dae-Rae, Suwon-City, Kyungki-Do (KR); Lee, Jeong-Hee, Suwon-City, Kyungki-Do (KR)
(74) Representative: Read, Matthew Charles

(56) References cited:
- EP-A- 0 648 065
- DE-U- 9 207 671
- GB-A- 592 641
- GB-A- 2 215 187
- US-A- 5 069 117

## Description

The present invention relates to support for supporting food in a microwave oven comprising a main prong for holding relatively large food items, an auxiliary prong for holding relatively small food items and coupling means for coupling the auxiliary prong to the main prong.

An auxiliary cooking device is disclosed in KR-A-95-11973 and is shown in Figure 10.

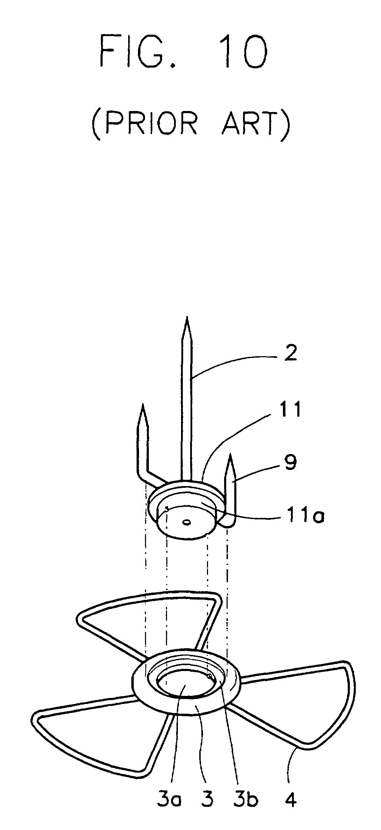

Referring to Figure 10, an auxiliary cooking device comprises a supporting base 4, which is generally placed on the floor (not shown) of the cooking chamber or on a cooking tray (not shown), a fixing member 3 coupled at the centre of the supporting base 4 and provided with an opening 3a and a seat 3b formed around the opening 3a, a cover member 11 having a projection 11a which is positioned on the seat 3b and engages the opening 3a. A foodstuff supporting prong 2 and a foodstuffs balancing prongs 9 are fitted to the cover member 11.

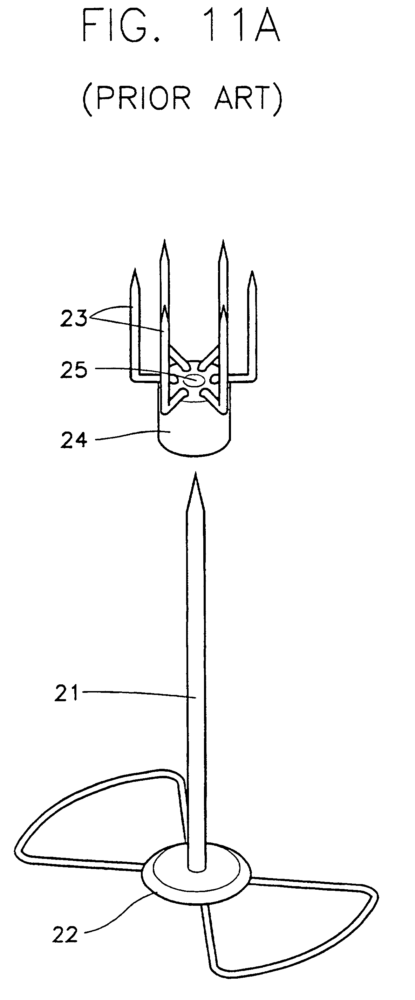

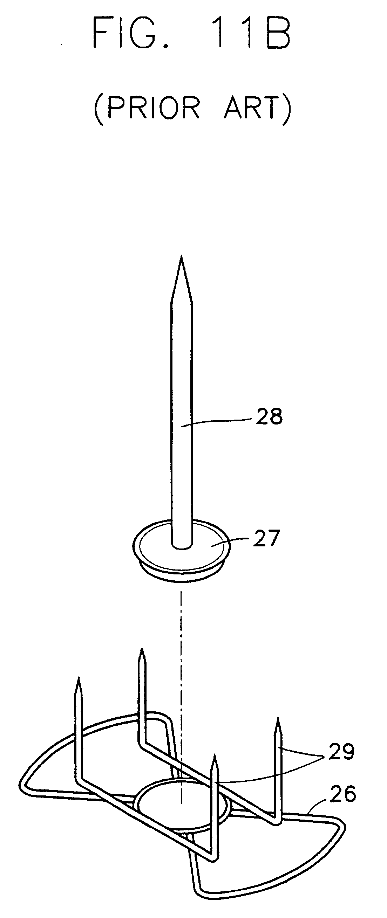

The above-described auxiliary cooking device suffers from the problem that it is not suitable for cooking small items such a slices of meat. To solve this problem, the auxiliary cooking devices as shown in Figures 11A and 11B have been developed.

Referring first to Figure 11A, the auxiliary cooking device comprises a main supporting prong 21 used for holding relatively large food items, the main supporting prong 21 being erect and coupled to a supporting base 22, and a plurality of auxiliary supporting prongs 23 for holding small food items, the auxiliary supporting bars 23 being welded to a coupling member 24 having a hole 25 for allowing the insertion of the main supporting prong 21 therethrough.

Referring to Fig. 11B, another prior art auxiliary cooking device comprises a plurality of auxiliary supporting prongs 29, on which small foods are placed, welded on a supporting base 26, and a main supporting prong 28 for holding relatively large food items, the main supporting prong 28 being erect and coupled to a connecting member 27 which is removably coupled to the supporting base 26.

These devices suffer from the problem that an extra welding step is required for their manufacture and, since the auxiliary prongs cannot be removed, storage can be troublesome.

The present invention is made in an effort to solve the above-described problems.

A food support according to the present invention is characterised in that the auxiliary prong is removably received by the coupling means. Preferably, a plurality of auxiliary prongs are removably received by the coupling means.

Preferably, the main prong extends longitudinally partially or fully through the coupling means.

The coupling means may be permanently affixed to the main prong.

Conveniently, a base is provided, the base comprising a radial extension from the lower end of the main prong and the coupling means having a slot for receiving the radial extension so as to prevent rotation of the coupling means relative to the main prong.

Preferably, the coupling means includes a hole for receiving an end of the or each auxiliary prong. More preferably, the hole or holes open in an upwardly directed face of the coupling means and the or each auxiliary prong comprises a first portion inserted into the hole or one of the holes and a second portion extending with a radial component with respect to the main prong. Advantageously, a radially extending channel is provided in the coupling mean leading from the or each hole and receives the second portion an auxiliary prong.

Embodiments of the present invention will now be described, by way of example, with reference to Figures 1 to 9 of the accompanying drawings, in which:
Figure 1 is a sectional view illustrating a microwave oven in which an auxiliary cooking device according to a present invention is installed;
Figure 2 is an exploded perspective view of a first auxiliary cooking device according to the present invention;
Figure 3 is a sectional view taken along line III-III in Figure 2;
Figure 4 is an assembled perspective view of the auxiliary cooking device depicted in Figure 2;
Figure 5 is an exploded perspective view of a second auxiliary cooking device according to the present invention;
Figure 6 is a sectional view taken along line V-V in Figure 5;
Figure 7 is an assembled perspective view of the device of Figure 5;
Figure 8 is a perspective view of a third auxiliary cooking device according to the present invention;
Figure 9 is a perspective view of a fourth auxiliary cooking device according to the present invention;
Figure 10 is a perspective view of a conventional auxiliary cooking device; and
Figures 11A and 11B are perspective views of other conventional auxiliary cooking devices.

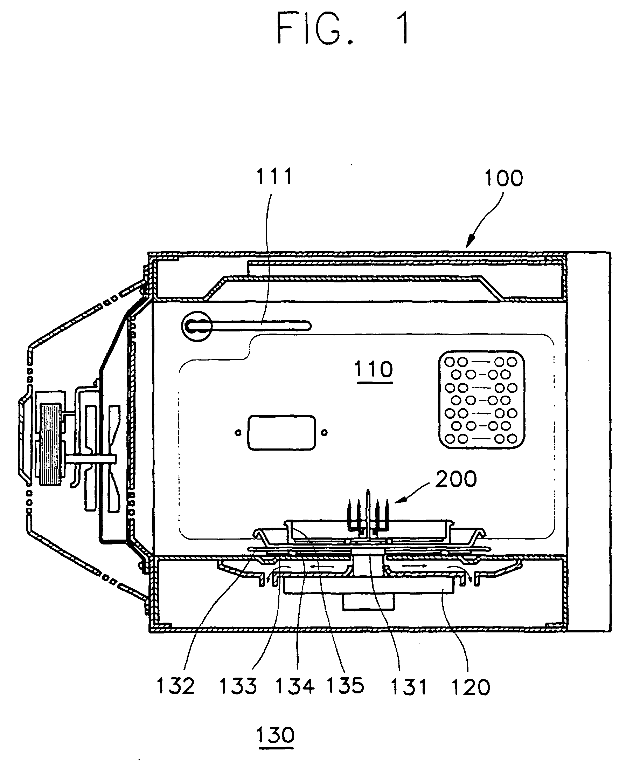

Referring to Figure 1, a cooking chamber 110 is provided in a microwave oven 100. A motor 120 is mounted below the cooking chamber 110, and a cooking tray assembly 130, rotated by the motor 120, is mounted on a bottom surface of the cooking chamber 110.

The cooking tray assembly 130 comprises a connecting member 131, a glass dish 132, rollers 133, and, if needed, a barbecue dish 134, and an oil dish 135. Describing more in detail, the connecting member 131 transmits the rotating force of the motor 120 to the glass dish 132, and the rollers 133 are disposed between the bottom face of the cooking chamber 110 and the glass dish 132 to rotatably support the glass dish 132. When barbecuing, the barbecue dish 134 is located on the glass dish 132, and the oil dish 135, for collecting residual oil from the foodstuffs being cooked, is disposed on the barbecue dish 134. Reference numeral 111 in the drawing represents a heater.

An auxiliary cooking device 200 for fixing foodstuffs to be cooked is disposed on the oil dish 135.

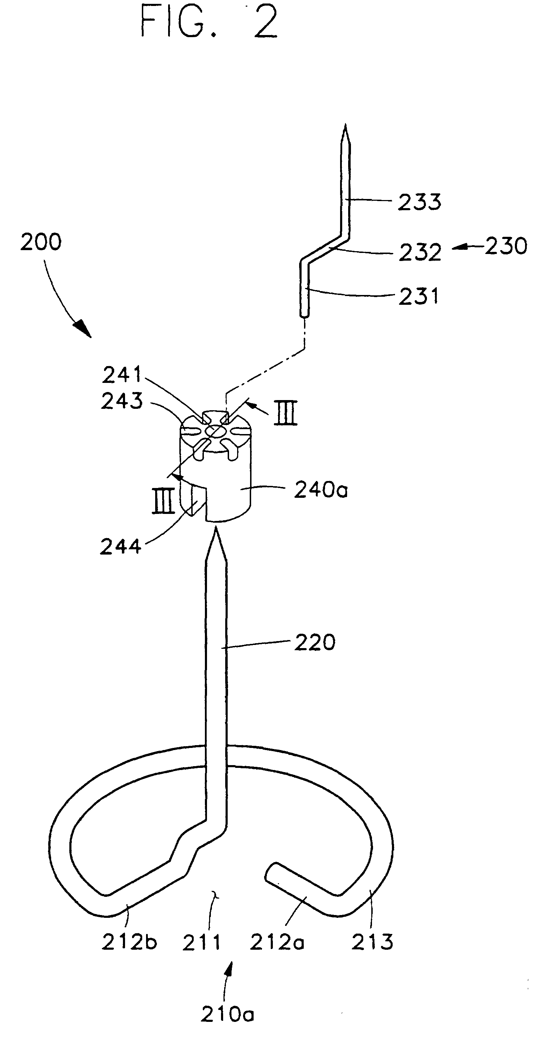

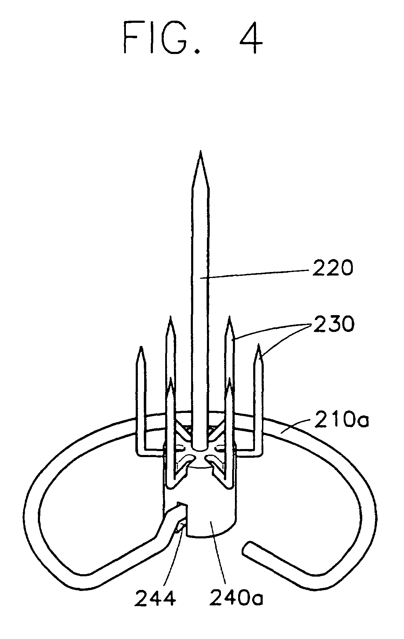

Referring to Figures 2, 3 and 4, the auxiliary cooking device 200 comprises a supporting base 210a, a main fixing prong 220 on which relatively big foodstuffs are held, a cylindrical coupling member 240a, and a plurality of auxiliary fixing prongs 230 (only one is shown) on which relatively small foodstuffs are held. The supporting base 210a is disposed on the bottom surface of the cooking chamber 110 or on the cooking tray 130 so as to stably maintain the main fixing prong 220, which is integrally formed therewith, in a stable, erect state. The coupling member 240a is coupled on the main fixing prong 220. The auxiliary fixing prongs 230 are fixedly inserted into the coupling member 240a. The combination of these parts will be described more in detail hereinafter.

The supporting base 210a has an opened ring-shape body 213 and supporting legs 212a and 212b which extend inwardly from both ends of the opened ring-shape body 214. The supporting legs 212a and 212b enable the base 210a to stand in a secure and stable state. The supporting leg 212b extends toward a centre of the opened ring-shape body 213, and the main fixing prong 220 integrally extends upward from a free end of the supporting leg 212b such that the supporting base 210a is not tilted to any side when foodstuff is fixed on the main fixing prong 220.

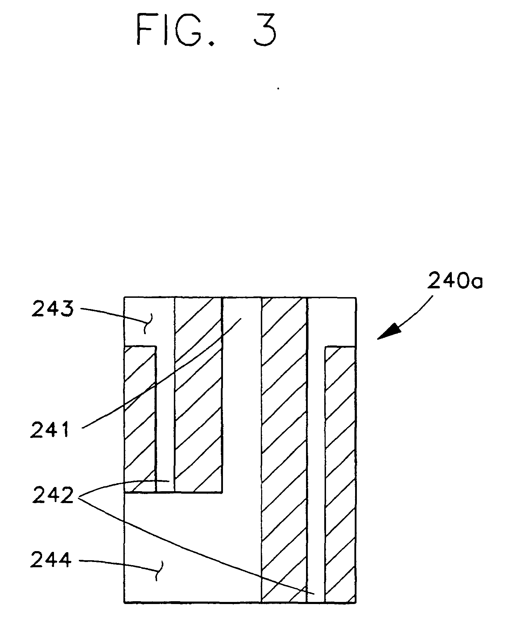

The coupling member 240a is removably slid along the main fixing prong 220. That is, as shown in Figure 3, formed along a longitudinal central axis of the coupling member 240a is a through hole 241 through which the main fixing prong 220 is inserted. A plurality of spaced holes 242 into which the auxiliary fixing prongs are removably and snugly fitted are radially formed on a periphery of the coupling member 240. On an upper surface of the coupling member 240a, a plurality of spaced peripheral grooves 243, communicating with the corresponding inserting holes 242, are formed. The peripheral grooves 243 prevent, when the auxiliary fixing prongs 230 are inserted through the inserting holes 242, the auxiliary fixing prongs 230 from inadvertently rotating.

In addition, on a lower surface of the coupling member 240a, a lower peripheral groove 244 is formed, communicating with the through hole 241. The supporting leg 212b connected to the main fixing prong 220 is received by the lower periphery groove. As a result, when the main fixing prong 220 is inserted through the through hole 241, the coupling member 240a is prevented from inadvertently rotating. Therefore, the supporting base 210a has an auxiliary function of preventing the rotation of the coupling member 240a when it is coupled to the main fixing prong 220.

As shown in Figure 2, each of the auxiliary fixing prongs 230 is formed having three straight prong sections. Namely, the auxiliary fixing prongs 230 have a first vertical prong section 231 which is inserted into the inserting hole (Figure 3), a horizontal prong section 232 horizontally and integrally extending from one end of the first vertical prong section 231 and seated on an upper peripheral groove 243, and a second vertical prong section 233 vertically and integrally extending from a distal end of the horizontal prong section 232 and on which food to be cooked is fixed. That is, after fixing food on the second vertical prong 233, the first vertical prong 231 is inserted into the inserting hole 242 so that the horizontal prong section 232 is seated on the peripheral groove 243.

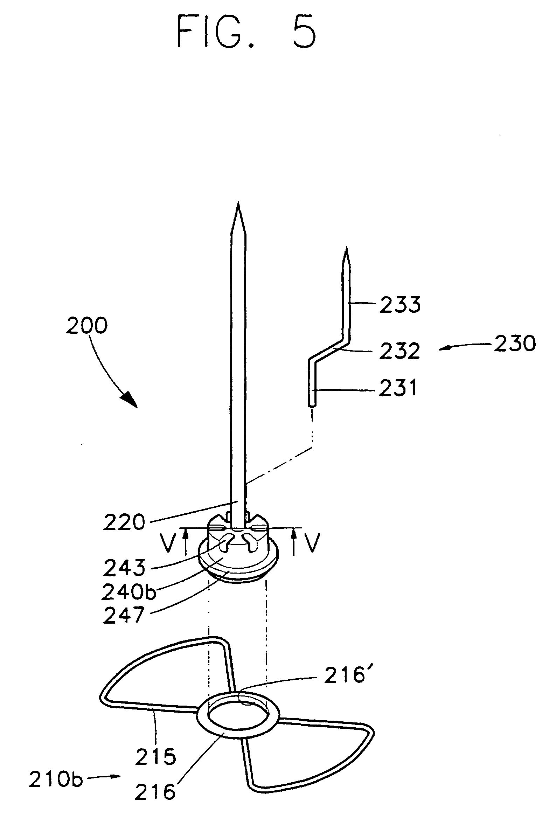

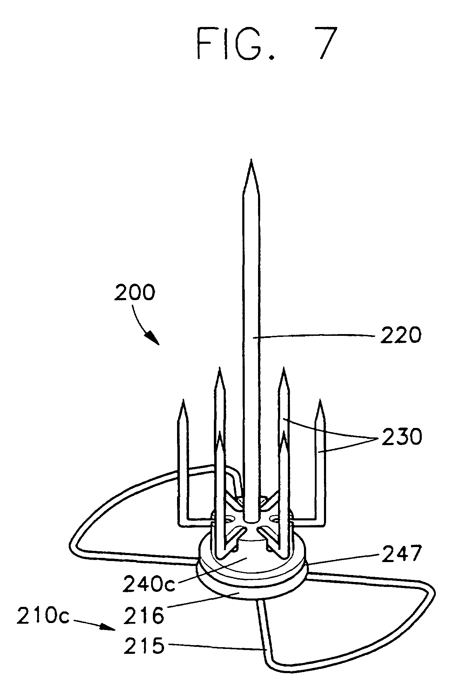

Referring to Figures 5, 6 and 7, a main fixing prong 220 is separately prepared from a supporting base 210b. The supporting base 210b comprises a toroidal body 216 having an opening 216' and a plurality of triangular frames 215 which are attached to the circumference of the body 215. The main fixing prong 220 is inserted into the centre of a coupling member 240b, the coupling member 240b being disposed in the opening 216'. In addition, auxiliary fixing prongs 230 are removably inserted in a coupling member 240b and project radially.

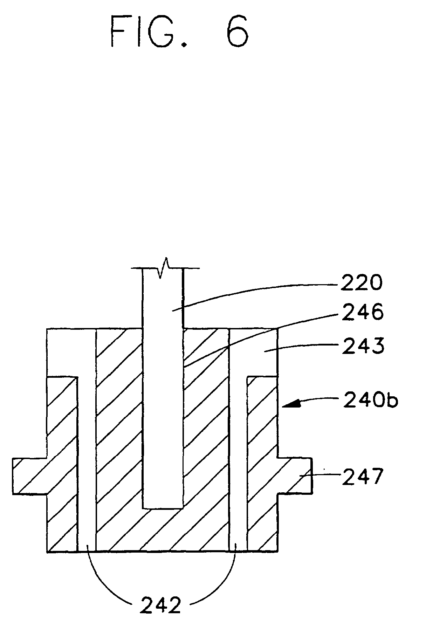

Describing more in detail, as shown in Figure 6, the coupling member 240b is provided with a coupling hole 246 into which the main fixing prong 220 is inserted and which is formed along a centrally axis of the coupling member 240b, a plurality of inserting holes 242 into which the auxiliary fixing prongs 230 are inserted, and a plurality of periphery grooves 243 formed on a periphery of the upper surface of the coupling member 240b and communicating with the corresponding inserting holes 242, the periphery grooves 243 preventing the auxiliary fixing prongs 230 from rotating. In addition, the coupling member 240b is provided with a circumferential stopper flange 247 formed on the circumference thereof so that when the coupling member 240b is inserted into the opening 216' of the toroidal body 216, it rests on the body 216. The auxiliary cooking device 200 also allows the auxiliary fixing prongs 230 to be removably inserted into the coupling member 240b as in the above embodiment.

As described, in the first and second embodiments of the present invention, the main fixing member 210a is integrally formed with the supporting base 210a as shown in Figure 2 or separately formed from the supporting base 210b as shown in Figure 5.

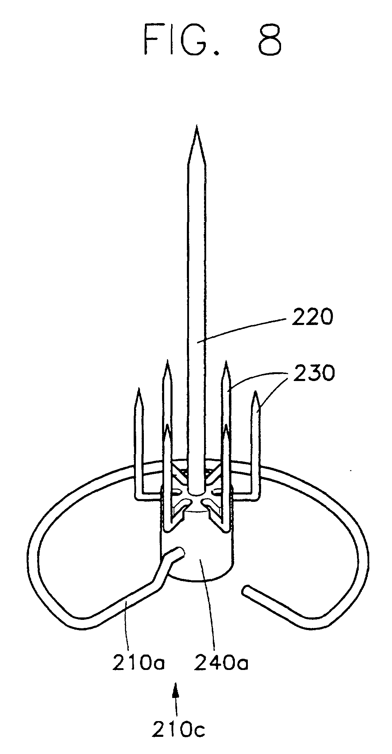

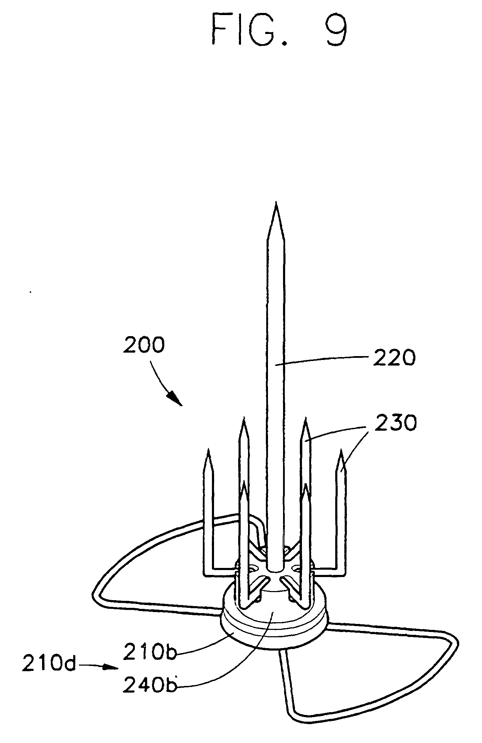

Referring to Figures 8 and 9, a supporting base 210c is made by assembling a coupling member 240a and a supporting base 210a, both of which are shown in Figure 2, and a supporting base assembly 210d is made by assembling the coupling member 240b and the supporting base 210b both of which are shown in Figure 5. That is, the supporting base, the coupling member and the main fixing prong can be integrally assembled, and the auxiliary fixing prongs can be removably mounted to the coupling member.

In addition, the coupling member is made of Teflon (RTM) material so as to prevent sparks from being generated. That is, if the coupling member is made of metal, since the supporting base, the main fixing prong and the auxiliary fixing prongs are usually made of metal, sparks can occur at points of contact therebetween.

While the invention has been described in connecting with what is presently considered to be most practical and preferred embodiments, it is to be understood that the invention is not limited to the disclosed embodiments, but, on the contrary, it is intended to cover various modifications and equivalent arrangements.

## Claims

1. A support for supporting food in a microwave oven comprising a main prong (220) for holding relatively large food items, an auxiliary prong (230) for holding relatively small food items and coupling means (240a; 240b; 240c) for coupling the auxiliary prong to the main prong, **characterised in that** the auxiliary prong is removably received by the coupling means.

2. A support according to claim 1, wherein a plurality of auxiliary prongs are removably received by the coupling means.

3. A support according to claim 1 or 2, wherein the main prong extends longitudinally through the coupling means.

4. A support according to claim 3, wherein the main prong extends completely longitudinally through the coupling means.

5. A support according to any preceding claim, wherein the coupling means is permanently affixed to the main prong.

6. A support according to any one of claims 1 to 4, including a base (211), the base comprising a radial extension (212b) from the lower end of the main prong and the coupling means having a slot (244) for receiving the radial extension so as to prevent rotation of the coupling means relative to the main prong.

7. A support according to any preceding claim, wherein the coupling means includes a hole (242) for receiving an end (231) of the or each auxiliary prong.

8. A support according to claim 7, wherein the hole or holes (242) open in an upwardly directed face of the coupling means and the or each auxiliary prong comprises a first portion (231) inserted into the hole (242) or one of the holes (242) and a second portion (232) extending with a radial component with respect to the main prong.

9. A support according to claim 8, wherein a radially extending channel (243) is provided in the coupling mean leading from the or each hole (242) and receives the second portion an auxiliary prong (230).

10. A support according to claim 2, comprising.
a supporting base (211) for being placed in the cooking chamber (110) of a microwave oven coupled to the coupling means (240a; 240b; 240c);
wherein the main prong (220) is supported on the supporting base (211) or the coupling means (240a; 240b; 240c).

11. A support according to claim 10, wherein said supporting base (211) is configured in an opened ring shape, opposite ends of which extend inward so as to provide supporting legs (212a, 212b) and the main prong (220) extends upward from a free end of one of the supporting legs (212a, 212b).

12. A support according to claim 11, wherein said coupling means (240a) comprises:
a through hole (241) into which said main prong (220) is inserted;
a plurality of inserting holes through which said auxiliary prongs (220) are removably inserted;
a plurality of upper periphery grooves (243) communicating with said corresponding inserting holes (243) so as to prevent the auxiliary prongs (230) from rotating; and
a lower periphery groove (244) communicating with said through hole (241) so as to prevent the main prong (220) from rotating when it is inserted into said through hole (241).

13. A support according to claim 10, wherein said supporting base includes a plurality of wing portions (215) and a doughnut-shaped body (216) connecting the wing portions (215) and said coupling means (240b; 240c), on which said auxiliary prongs (230) and the main prong (220) are supported, is coupled on the doughnut-shaped body (216).

14. A support according to claim 13, wherein a circumference stopper flange engaged with the doughnut-shaped body (216) is formed on a circumference of the coupling means (240b) so as to prevent the coupling means (240b) from becoming detached from the body (216).

15. A support according to claim 14, wherein said coupling means (240b) comprises:
a coupling hole into which said main prong (220) is coupled;
a plurality of inserting holes through which said auxiliary fixing bars (230) are removably inserted; and
a plurality of upper periphery grooves (243) communicating with said corresponding inserting holes so as to prevent the auxiliary prongs (230) from rotating.

16. A support according to claim 12, wherein each of the auxiliary prongs (230) is formed having three sections joined by bends, that is, each auxiliary prong (230) has a first vertical bar section (231) inserted into an inserting hole, a horizontal bar section (232) horizontally integrally extending from one end of the first vertical bar section (231) and seated on an upper periphery groove (243), and a second vertical bar section (233) vertically and integrally extending form a distal end of the horizontal bar section (232) and on which foodstuff to be cooked is fixed.

17. A support according to claim 14, wherein each of the auxiliary prongs (230) is formed having three sections joined by bends, that is, each auxiliary prong has a first vertical bar section (231) inserted into the inserting hole, a horizontal bar section (232) horizontally integrally extending from one end of the first vertical bar section (231) and seated on the upper periphery groove, and a second vertical bar section (233) vertically integrally extending from a distal end of the horizontal bar section (231) and on which foodstuff to be cooked is fixed.

18. A support according to claim 10, wherein the supporting base and the coupling means (240b) are integrally formed.

19. A support according to claim 10, wherein the coupling means (240b) is removably coupled on the supporting base.

20. A support according to claim 10, wherein the coupling means (240a; 240b; 240c) is made of PTFE resin.

21. A microwave oven having a cooking chamber (110) with a support (200), according to any preceding claim, disposed therein.

## Patentansprüche

1. Träger zum Abstützen von Gargut in einem Mikrowellenofen mit einer Hauptzinke (220) zum Halten von relativ großen Gargutgegenständen, einer Hilfszinke (230) zum Halten von relativ kleinen Gargutgegenständen und einem Kopplungsmittel (240a; 240b; 240c) zum Koppeln der Hilfszinke mit der Hauptzinke, **dadurch gekennzeichnet, dass** die Hilfszinke vom Kopplungsmittel abnehmbar aufgenommen ist.

2. Träger nach Anspruch 1, wobei eine Vielzahl von Hilfszinken vom Kopplungsmittel abnehmbar aufgenommen sind.

3. Träger nach Anspruch 1 oder 2, wobei sich die Hauptzinke der Länge nach durch das Kopplungsmittel erstreckt.

4. Träger nach Anspruch 3, wobei sich die Hauptzinke vollständig der Länge nach durch das Kopplungsmittel erstreckt.

5. Träger nach einem vorangehenden Anspruch, wobei das Kopplungsmittel dauerhaft an der Hauptzinke befestigt ist.

6. Träger nach einem der Ansprüche 1 bis 4 mit einer Basis (211), wobei die Basis eine radiale Verlängerung (212b) vom unteren Ende der Hauptzinke umfasst und das Kopplungsmittel einen Schlitz (244) zum Aufnahmen der radialen Verlängerung aufweist, um eine Drehung des Kopplungsmittels relativ zur Hauptzinke zu verhindern.

7. Träger nach einem vorangehenden Anspruch, wobei das Kopplungsmittel ein Loch (242) zum Aufnehmen eines Endes (231) der oder jeder Hilfszinke umfasst.

8. Träger nach Anspruch 7, wobei das Loch oder die Löcher (242) in einer nach oben gerichteten Fläche des Kopplungsmittels mündet (münden) und die oder jede Hilfszinke einen ersten Teil (231), der in das Loch (242) oder eines der Löcher (242) eingesetzt ist, und einen zweiten Teil (232), der sich mit einer radialen Komponente bezüglich der Hauptzinke erstreckt, umfasst.

9. Träger nach Anspruch 8, wobei ein sich radial erstreckender Kanal (243) im Kopplungsmittel vorgesehen ist, der von dem oder jedem Loch (242) herführt und den zweiten Teil einer Hilfszinke (230) aufnimmt.

10. Träger nach Anspruch 2 mit:
einer Tragbasis (211) zum Anordnen in der Kochkammer (110) eines Mikrowellenofens, welche mit dem Kopplungsmittel (240a; 240b; 240c) gekoppelt ist;
wobei die Hauptzinke (220) auf der Tragbasis (211) oder dem Kopplungsmittel (240a; 240b; 240c) abgestützt ist.

11. Träger nach Anspruch 10, wobei die Tragbasis (211) in einer Form eines offenen Rings gestaltet ist, deren entgegengesetzte Enden sich nach innen erstrecken, um Stützschenkel (212a, 212b) bereitzustellen, und sich die Hauptzinke (220) von einem freien Ende von einem der Stützschenkel (212a, 212b) nach oben erstreckt.

12. Träger nach Anspruch 11, wobei das Kopplungsmittel (240a) umfasst:
ein Durchgangsloch (241), in das die Hauptzinke (220) eingesetzt ist;
eine Vielzahl von Einsetzlöchern, durch die die Hilfszinken (220) entnehmbar eingesetzt sind;
eine vielzahl von oberen Umfangsnuten (243), die mit den entsprechenden Einsetzlöchern (243) in Verbindung stehen, um zu verhindern, dass sich die Hilfszinken (230) drehen; und
eine untere Umfangsnut (244), die mit dem Durchgangsloch (241) in Verbindung steht, um zu verhindern, dass sich die Hauptzinke (220) dreht, wenn sie in das Durchgangsloch (241) eingesetzt ist.

13. Träger nach Anspruch 10, wobei die Tragbasis eine Vielzahl von Flügelteilen (215) und einen ringförmigen Körper (216) umfasst, der die Flügelteile (215) verbindet, und das Kopplungsmittel (240b; 240c), an dem die Hilfszinken (230) und die Hauptzinke (220) abgestützt sind, mit dem ringförmigen Körper (216) gekoppelt ist.

14. Träger nach Anspruch 13, wobei ein Umfangsanschlagflansch, der mit dem ringförmigen Körper (216) in Eingriff steht, auf einem Umfang des Kopplungsmittels (240b) ausgebildet ist, um zu verhindern, dass das Kopplungsmittel (240b) sich vom Körper (216) löst.

15. Träger nach Anspruch 14, wobei das Kopplungsmittel (240b) umfasst:
ein Kopplungsloch, in das die Hauptzinke (220) eingekoppelt ist;
eine Vielzahl von Einsetzlöchern, durch die die Hilfsbefestigungsstangen (230) entnehmbar eingesetzt sind; und
eine Vielzahl von oberen Umfangsnuten (243), die mit den entsprechenden Einsetzlöchern in Verbindung stehen, um zu verhindern, dass sich die Hilfszinken (230) drehen.

16. Träger nach Anspruch 12, wobei jede der Hilfszinken (230) mit drei Abschnitten ausgebildet ist, die durch Biegungen verbunden sind, das heißt jede Hilfszinke (230) einen ersten vertikalen Stangenabschnitt (231), der in ein Einsetzloch eingesetzt ist, einen horizontalen Stangenabschnitt (232), der sich horizontal einteilig von einem Ende des ersten vertikalen Stangenabschnitts (231) erstreckt und auf einer oberen Umfangsnut (243) sitzt, und einen zweiten vertikalen Stangenabschnitt (233), der sich vertikal und einteilig von einem fernen Ende des horizontalen stangenabschnitts (232) erstreckt und auf dem zu kochende Nahrungsmittel befestigt werden, aufweist.

17. Träger nach Anspruch 14, wobei jede der Hilfszinken (230) mit drei Abschnitten ausgebildet ist, die durch Biegungen verbunden sind, das heißt jede Hilfszinke einen ersten vertikalen Stangenabschnitt (231), der in das Einsetzloch eingesetzt ist, einen horizontalen Stangenabschnitt (232), der sich horizontal einteilig von einem Ende des ersten vertikalen Stangenabschnitts (231) erstreckt und auf der oberen Umfangsnut sitzt, und einen zweiten vertikalen stangenabschnitt (233), der sich vertikal einteilig von einem fernen Ende des horizontalen Stangenabschnitts (231) erstreckt und auf dem zu kochende Nahrungsmittel befestigt werden, aufweist.

18. Träger nach Anspruch 10, wobei die Tragbasis und das Kopplungsmittel (240b) einteilig ausgebildet sind.

19. Träger nach Anspruch 10, wobei das Kopplungsmittel (240b) abnehmbar an die Tragbasis gekoppelt ist.

20. Träger nach Anspruch 10, wobei das Kopplungsmittel (240a; 240b; 240c) aus PTFE-Harz besteht.

21. Mikrowellenofen mit einer Kochkammer (110) mit einem Träger (200) nach einem vorangehenden Anspruch, der in dieser angeordnet ist.

## Revendications

1. Un support pour supporter des aliments dans un four à micro-ondes, comprenant une dent principale (220) pour soutenir des articles alimentaires relativement grands, une dent auxiliaire (230) pour soutenir des éléments d'alimentation relativement petits et un moyen de couplage (240a ; 240b ; 240c) pour coupler le fourchon auxiliaire à la dent principale, **caractérisé en ce que** le fourchon auxiliaire est reçue de façon amovible par le moyen de couplage.

2. Un support selon la revendication 1, dans lequel une pluralité de fourchons auxiliaires sont reçues de façon amovible par le moyen de couplage.

3. Un support selon la revendication 1 ou 2, dans lequel la dent principale s'étend longitudinalement à travers le moyen de couplage.

4. Un support selon la revendication 3, dans lequel la dent principale s'étend complètement longitudinalement à travers le moyen de couplage.

5. Un support selon l'une quelconque des revendications précédentes, dans lequel le moyen de couplage est fixé en permanence à la dent principale.

6. Un support selon l'une quelconque des revendications 1 à 4, incluant une base (211), la base comprenant un prolongement radial (212b) à partir de l'extrémité inférieure de la dent principale et du moyen de couplage ayant une fente (244) pour recevoir le prolongement radial, de façon à empêcher la rotation du moyen de couplage par rapport à la dent principale.

7. Un support selon l'une quelconque des revendications précédentes, dans lequel le moyen de couplage inclut un trou (242) pour recevoir une extrémité (231) du ou de chaque fourchon auxiliaire.

8. Un support selon la revendication 7, dans lequel le ou les trous (242) s'ouvrent dans une face du moyen de couplage dirigée vers le haut, et la ou chaque dent auxiliaire comprend une première partie (231) insérée dans le trou (242) ou un des trous (242) et une seconde partie (232) s'étendant avec une composante radiale par rapport à la dent principale.

9. Un support selon la revendication 8, dans lequel un canal (243) s'étendant radialement est prévu dans le moyen de couplage conduisant depuis le ou chaque trou (242), et reçoit la seconde partie d'une dent auxiliaire (230).

10. Un support selon la revendication 2, comprenant:
une base de support (211) destinée à être placée dans la chambre de cuisson (110) d'un four à micro-ondes, couplée au moyen de couplage (240a; 240b; 240c) ;
dans lequel la dent principale (220) est supportée sur la base de support (211) ou sur le moyen de couplage (240a ; 240b ; 240c).

11. Un support selon la revendication 10, dans lequel ladite base de support (211) présente la configuration d'une forme d'anneau ouvert, dont les extrémités opposées s'étendent vers l'intérieur, de façon à constituer des pattes de support (212a, 212b), et la dent principale (220) s'étend vers le haut depuis une extrémité libre d'une des pattes de support (212a, 212b).

12. Un support selon la revendication 11, dans lequel ledit moyen de couplage (240a) comprend :
un trou traversant (241) dans lequel ladite dent principale (220) est insérée ;
une pluralité de trous d'insertion à travers lesquels lesdites dents auxiliaires (220) sont insérées de façon amovible ;
une pluralité de rainures périphériques supérieures (243) communiquant avec lesdits trous d'insertion correspondants (243), de façon à empêcher les dents auxiliaires (230) de tourner ; et
une rainure périphérique inférieure (244) communiquant avec ledit trou traversant (241), de façon à empêcher la dent principale (220) de tourner quand elle est insérée dans ledit trou traversant (241).

13. Un support selon la revendication 10, dans lequel ladite base de support inclut une pluralité de parties d'aile (215) et un corps (216) en forme de tore (216) reliant les parties d'aile (215) et ledit moyen de couplage (240b ; 240c), sur lequel lesdites dents auxiliaires (230) et la dent principale (220) sont supportées, est couplé sur le corps en forme de tore (216).

14. Un support selon la revendication 13, dans lequel un rebord de butée circonférentiel en contact avec le corps en forme de tore (216) est formé sur une circonférence du moyen de couplage (240b), de façon à empêcher le moyen de couplage (240b) de se détacher du corps (216).

15. Un support selon la revendication 14, dans lequel ledit moyen de couplage (240b) comprend :
un trou de couplage dans lequel ladite dent principale (220) est couplée ;
une pluralité de trous d'insertion à travers lesquels lesdites barres auxiliaires de fixation (230) sont insérées de façon amovible ; et
une pluralité de rainures périphériques supérieures (243) communiquant avec lesdits trous d'insertion correspondants, de façon à empêcher les dents auxiliaires (230) de tourner.

16. Un support selon la revendication 12, dans lequel chacune des dents auxiliaires (230) est formée de trois parties jointes par des pliages, c'est-à-dire que chaque dent auxiliaire (230) a une première partie de barre verticale (231) insérée dans un trou d'insertion, une partie de barre horizontale (232) s'étendant monobloc horizontalement depuis une extrémité de la première partie de barre verticale (231) et assise sur une rainure périphérique supérieure (243), et une seconde section de barre verticale (233) s'étendant monobloc verticalement depuis une extrémité distale de la partie de barre horizontale (232) et sur laquelle est fixé l'aliment à cuire.

17. Un support selon la revendication 14, dans lequel chacun des dents auxiliaires (230) est formé de trois parties jointes par des pliages, c'est-à-dire que, chaque dent auxiliaire a une première partie de barre verticale (231) insérée dans le trou d'insertion, une partie de barre horizontale (232) s'étendant monobloc horizontalement depuis une extrémité de la première partie de barre verticale (231) et assise sur la rainure périphérique supérieure, et une seconde section de barre verticale (233) s'étendant monobloc verticalement depuis une extrémité distale de la partie de barre horizontale (231) et sur laquelle est fixé l'aliment à cuire.

18. Un support selon la revendication 10, dans lequel la base de support et le moyen de couplage (240b) sont monobloc formés.

19. Un support selon la revendication 10, dans lequel le moyen de couplage (240b) est couplé de façon amovible sur la base de support.

20. Un support selon la revendication 10, dans lequel le moyen de couplage (240a ; 240b ; 240c) est fait de résine PTFE (polytétrafluoroéthylène).

21. Un four à micro-ondes ayant une chambre de cuisson (110), avec un support (200) selon l'une quelconque des revendications précédentes, disposé à l'intérieur.
